# EUROPEAN PATENT APPLICATION

(11) **EP 4 089 471 A1**
(43) Date of publication of application: **16.11.2022**
(21) Application number: 21744945.3
(22) Date of filing: 14.01.2021
(51) Int. Cl.: G02B 30/27

(54) **LENS GRATING, DISPLAY MODULE, DISPLAY SCREEN, AND DISPLAY**

(30) Priority: 20.01.2020 CN 202010073897; 15.07.2020 CN 202010681239
(71) Applicant: Beijing Ivisual 3D Technology Co., Ltd., Beijing 100055 (CN); Visiotech Ventures Pte. Ltd., Singapore 188979 (SG)
(72) Inventor: DIAO, Honghao, Beijing 100055 (CN); HUANG, Lingxi, Singapore 188979 (SG)
(74) Representative: Manitz Finsterwald Patent- und Rechtsanwaltspartnerschaft mbB
(86) International application number: PCT/CN2021/071709
(87) International publication number: WO 2021/147760

(57) **Abstract**

The present application relates to the technical field of 3D display, and discloses a lens grating, comprising a base part and a lens arranged on one side of the base part, wherein an antireflection layer is arranged on one side of the lens or the base part. According to the present application, the antireflection layer is arranged on one side of the base part of the lens grating or one side of the lens arranged on one side of the base part, so as to reduce a reflection loss of the lens grating, increase an emergent rate of light, and solve a technical problem that stray light reduces display quality of 3D images. The present application further discloses a display module, a display screen and a display.

## Description

The present application claims priority to the Chinese Patent Application with an application number of 202010681239.5 and a title of "Lens Grating, Display Module, Display Screen And Display", filed to China National Intellectual Property Administration on July 15th, 2020, the disclosures of which are hereby incorporated by reference; the present application claims priority to the Chinese Patent Application with an application number of 202010073897.6 and a title of "3D Grating and 3D Display Apparatus", filed to China National Intellectual Property Administration on January 20th, 2020, the disclosures of which are hereby incorporated by reference.

### TECHNICAL FIELD

The present application relates to the technical field of 3D display, and for example, relates to a lens grating, a display module, a display screen and a display.

### BACKGROUND

At present, a lens grating is widely used in 3D displays; and 3D displays based on the lens grating can acquire a 3D viewing effect without using 3D glasses. A principle of binocular parallax is mainly utilized, so that left eyes of a user can receive left-eye images, and right eyes of the user can receive right-eye images, thereby realizing the 3D viewing effect.

In a process of implementing embodiments of the present disclosure, at least the following problems are found in related technologies:
A reflection loss of a grating structure is relatively large, so that an emergent rate of light is low, and stray light reduces display quality of 3D images.

### SUMMARY

In order to provide a basic understanding of some aspects of the disclosed embodiments, a brief summary is given below. The summary is not intended to be a general comment, nor to identify key/important components or describe the scope of protection of the embodiments, but to be a preface to the following detailed description.

Embodiments of the present disclosure provide a lens grating, a display module, a display screen and a display, to solve a technical problem of low emergent rate of light due to relatively large reflection loss of a grating structure in related technologies.

In some embodiments, embodiments of the present disclosure provide a lens grating, comprising a base part, and a lens arranged on one side of the base part,
wherein an antireflection layer is arranged on one side of the lens or the base part.

Optionally, the antireflection layer has at least one of the following setting modes:
the antireflection layer is arranged between the lens and the base part;
the antireflection layer is arranged on one side, away from the base part, of the lens; and
the antireflection layer is arranged on one side, away from the lens, of the base part.

Optionally, the antireflection layer has at least one of the following setting modes:
the antireflection layer is arranged partially or wholly between the lens and the base part;
the antireflection layer is arranged partially or wholly on the side, away from the base part, of the lens; and
the antireflection layer is arranged partially or wholly on the side, away from the lens, of the base part.

Optionally, a covering layer is further included; and the covering layer has at least one of the following setting modes:
the covering layer is arranged on the side, away from the lens, of the antireflection layer, when the antireflection layer is arranged on the side, away from the base part, of the lens; and
the covering layer is arranged on the side, away from the base part, of the antireflection layer, when the antireflection layer is arranged on the side, away from the lens, of the base part.

Optionally, the antireflection layer is arranged on a surface of the covering layer.

Optionally, refractive indexes of the lens and the covering layer are different.

Optionally, the refractive indexes of at least two of the following antireflection layers are different:
a refractive index of the antireflection layer arranged between the lens and the base part;
a refractive index of the antireflection layer arranged on a side, away from the base part, of the lens;
a refractive index of the antireflection layer arranged on the side, away from the lens, of the base part; and
a refractive index of the antireflection layer arranged on the surface of the cover layer.

Optionally, the lens comprises at least one of concave lenses and convex lenses.

Optionally, the lens comprises at least one of lenticular lenses and spherical lenses.

Optionally, the lenses are arranged in array.

Optionally, the lenses comprise lenticular lenses; and part or all of the lenticular lenses are arranged in parallel.

Optionally, the lenses comprise spherical lenses; and part or all of the spherical lenses are arranged in array.

Optionally, the lens and the base part are integrally formed, or
the lens and the base part are arranged independently to each other.

In some embodiments, embodiments of the present disclosure further provide a display module, comprising the lens grating as described above.

In some embodiments, embodiments of the present disclosure further provide a display screen, comprising the display module as described above.

In some embodiments, embodiments of the present disclosure further provide a display, comprising the display screen as described above.

The lens grating, the display module, the display screen and the display provided by the embodiments of the present disclosure may achieve the following technical effects:
the antireflection layer is arranged on one side of the base part of the lens grating or one side of the lens arranged on one side of the base part, so as to reduce a reflection loss of the lens grating, increase an emergent rate of light, and solve a technical problem that stray light reduces display quality of 3D images.

The above general description and the following description are exemplary and explanatory only, and are not intended to limit the present application.

### DESCRIPTION OF DRAWINGS

At least one embodiment is illustrated by the corresponding drawings, and the illustrations and drawings do not limit the embodiments. Elements having the same reference numerals in the drawings are shown as similar elements, and the drawings are not intended to limit the scale, wherein:
Figs. 1, 2, and 3 are schematic diagrams of cross-sectional structures of a lens grating provided by embodiments of the present disclosure;
Figs. 4A, 4B, 5, 6A, 6B, 7A, 7B, 7C, 7D, 8A, 8B, 8C, 8D, 9A, 9B, 9C, 9D, 10A, 10B, 10C, 10D, 10E, 10F, 10G, and 10H are schematic diagrams of cross-sectional structures of antireflection layers provided by embodiments of the present disclosure;
Figs. 11A, 11B, 11C, 11D, 12A, 12B, 13A, 13B, 13C, 13D, 14A, 14B, 14C, 15A, 15B, 15C, 16A, 16B, 16C, 17A, 17B, 17C, 18A, 18B, 18C, 19A, 19B, 19C, 20A, 20B, 20C, 21A, 21B, 21C, 22A, 22B, 22C, 23A, 23B, 23C, 24A, 24B, 24C, 25A, 25B, 25C, 26A, 26B, 26C, and 26D are schematic diagrams of cross-sectional structures of covering layers provided by embodiments of the present disclosure;
Fig. 27 is a schematic diagram of a cross-sectional structure of a lens grating provided by an embodiment of the present disclosure;
Figs. 28A and 28B are schematic diagrams of arrangement of a plurality of lenticular lenses in a lens grating provided by embodiments of the present disclosure;
Figs. 28C and 28D are schematic diagrams of arrangement of a plurality of spherical lenses in a lens grating provided by embodiments of the present disclosure;
Fig. 28E is a schematic diagram of arrangement of a plurality of spherical lenses and a plurality of lenticular lenses in a lens grating provided by embodiments of the present disclosure;
Fig. 29A is a schematic diagram of a cross-sectional structure of a filling material provided by an embodiment of the present disclosure;
Fig. 29B is a schematic diagram of a cross-sectional structure of an imprint template provided by an embodiment of the present disclosure;
Fig. 29C is a schematic diagram of a cross-sectional structure of imprinting a filling material provided by an embodiment of the present disclosure;
Fig. 29D is a schematic diagram of a cross-sectional structure of integrally forming a lens and a base part according to an embodiment of the present disclosure;
Fig. 30 is a structural schematic diagram of a display module provided by an embodiment of the present disclosure;
Fig. 31 is a structural schematic diagram of a display screen provided by an embodiment of the present disclosure; and
Fig. 32 is a structural schematic diagram of a display provided by embodiments of the present disclosure.

### Reference numerals:

100: lens grating; 101: base part; 02: lens; 1021: lenticular lens; 1022: spherical lens; 103: antireflection layer; 104: covering layer; 105: filling material; 106: imprint template; 201: lens; 300: display module; 400: display screen; and 500: display.

### DETAILED DESCRIPTION

To understand features and technical contents of embodiments of the present disclosure in more detail, implementation of the embodiments of the present disclosure is described in detail below with reference to accompanying drawings; and the accompanying drawings are used for reference only, rather than limiting the embodiments of the present disclosure. In following technical description, for the convenience of explanation, a thorough understanding of the disclosed embodiments is provided through more details. However, at least one embodiment may be implemented without the details. In other cases, to simplify the accompanying drawings, well-known structures and apparatuses may be shown simplistically.

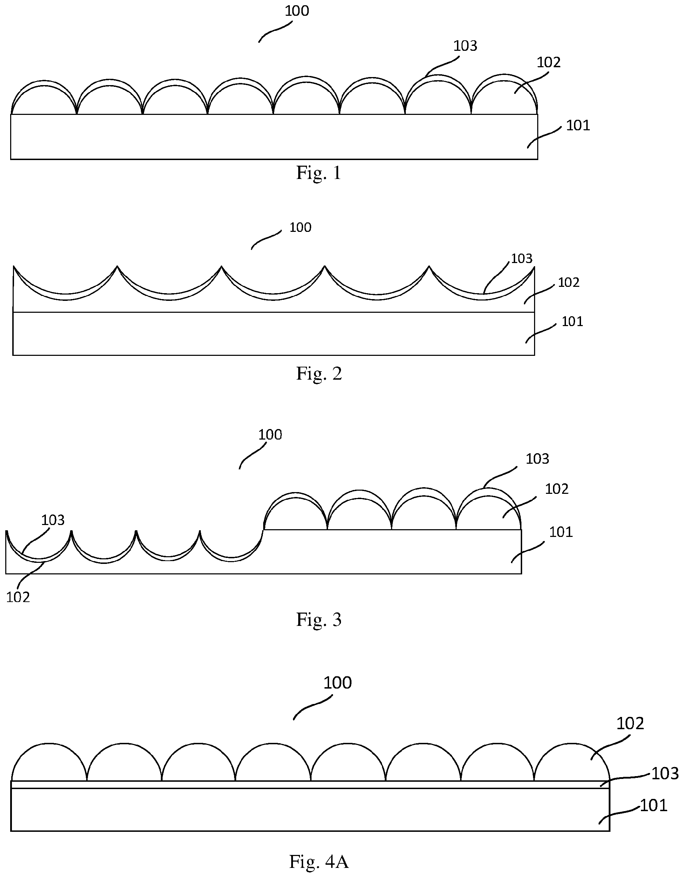

Referring to Fig. 1, a lens 102 may comprise convex lenses. A lens grating 100 provided by embodiments of the present disclosure may comprise a base part 101, and a lens 102 arranged on one side of the base part 101,
wherein an antireflection layer 103 may be arranged on one side of the lens 102 or the base part 101.

In some embodiments, the lens 102 comprises at least one of concave lenses and convex lenses.

Referring to Fig. 1, in some embodiments, the lens 102 may comprise convex lenses.

Referring to Fig. 2, the lens 102 may comprise concave lenses.

Referring to Fig. 3, the lens 102 may comprise a combination of convex lenses and concave lenses.

Embodiments of the present disclosure are mainly described below by taking a case that the lens 102 may be a convex lens as an example.

In some embodiments, the antireflection layer 103 may have at least one of the following setting modes:
the antireflection layer 103 may be arranged between the lens 102 and the base part 101;
the antireflection layer 103 may be arranged on one side, away from the base part 101, of the lens 102; and
the antireflection layer 103 may be arranged on one side, away from the lens 102, of the base part 101.

In some embodiments, the antireflection layer 103 may have at least one of the following setting modes:
the antireflection layer 103 may be arranged partially or wholly between the lens 102 and the base part 101;
the antireflection layer 103 may be arranged partially or wholly on the side, away from the base part 101, of the lens 102; and
the antireflection layer 103 may be arranged partially or wholly on the side, away from the lens 102, of the base part 101.

Referring to Fig. 4A, in some embodiments, the antireflection layer 103 may be arranged between the lens 102 and the base part 101. Optionally, the antireflection layer 103 may be arranged partially or wholly between the lens 102 and the base part 101.

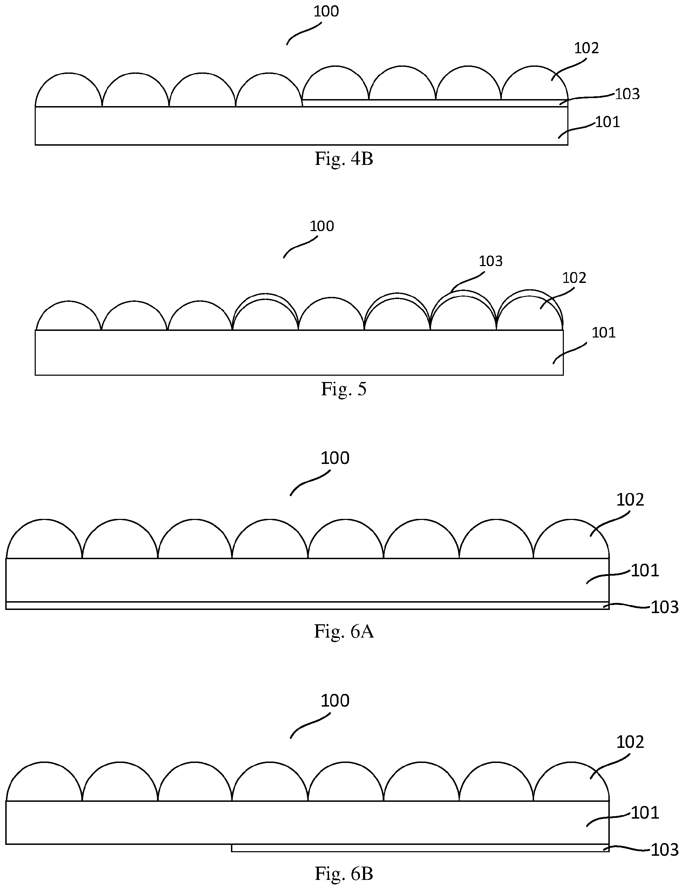

Referring to Fig. 4B, in some embodiments, the antireflection layer 103 may be arranged partially between the lens 102 and the base part 101.

Referring to Fig. 1, in some embodiments, the antireflection layer 103 may be arranged partially on the side, away from the base part 101, of the lens 102. Optionally, the antireflection layer 103 may be arranged wholly on the side, away from the base part 101, of the lens 102.

Referring to Fig. 5, in some embodiments, the antireflection layer 103 may be arranged partially on the side, away from the base part 101, of the lens 102.

Referring to Fig. 6A, in some embodiments, the antireflection layer 103 may be arranged on the side, away from the lens 102, of the base part 101. Optionally, the antireflection layer 103 may be arranged wholly on the side, away from the lens 102, of the base part 101.

Referring to Fig. 6B, in some embodiments, the antireflection layer 103 may be arranged partially on the side, away from the lens 102, of the base part 101.

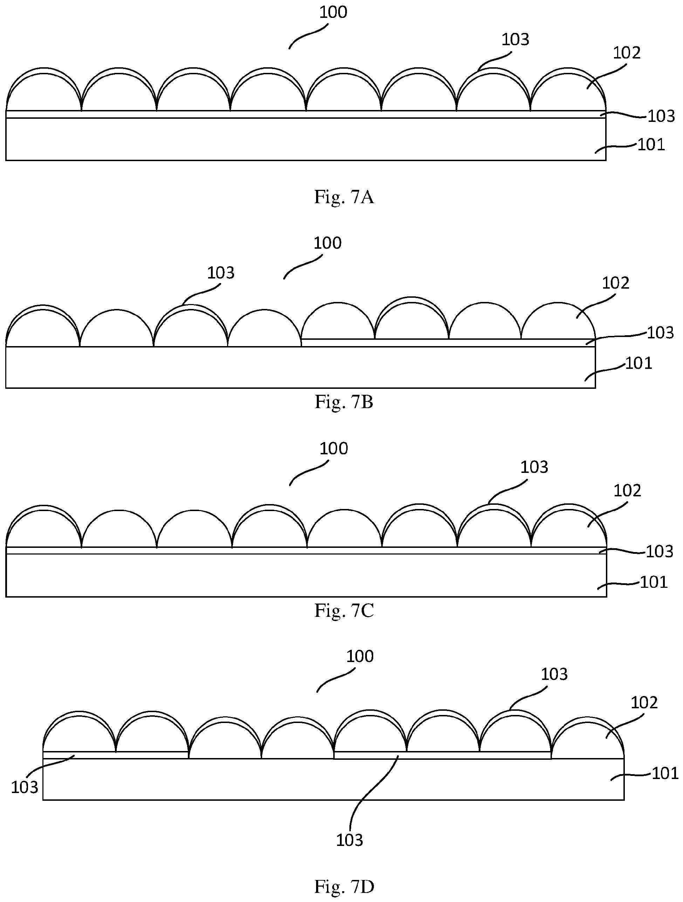

Referring to Fig. 7A, in some embodiments, the antireflection layer 103 may be arranged between the lens 102 and the base part 101; and the antireflection layer 103 may be arranged on the side, away from the base part 101, of the lens 102. Optionally, the antireflection layer 103 may be arranged wholly between the lens 102 and the base part 101; and the antireflection layer 103 may be arranged wholly on the side, away from the base part 101, of the lens 102.

Referring to Fig. 7B, in some embodiments, the antireflection layer 103 may be arranged partially between the lens 102 and the base part 101; and the antireflection layer 103 may be arranged partially on the side, away from the base part 101, of the lens 102.

Referring to Fig. 7C, in some embodiments, the antireflection layer 103 may be arranged wholly between the lens 102 and the base part 101; and the antireflection layer 103 may be arranged partially on the side, away from the base part 101, of the lens 102.

Referring to Fig. 7D, in some embodiments, the antireflection layer 103 may be arranged partially between the lens 102 and the base part 101; and the antireflection layer 103 may be arranged wholly on the side, away from the base part 101, of the lens 102.

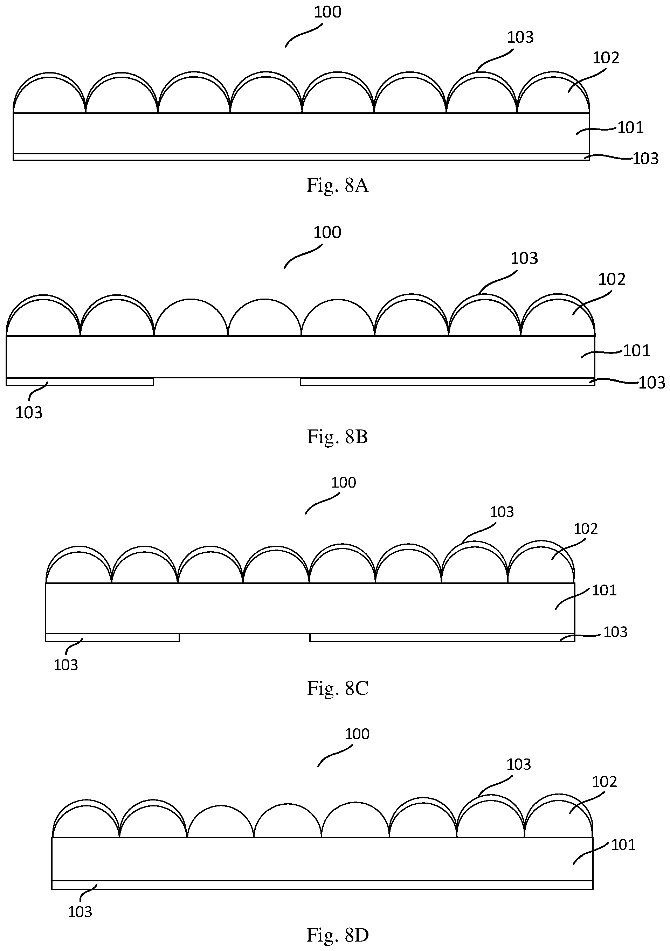

Referring to Fig. 8A, in some embodiments, the antireflection layer 103 may be arranged on the side, away from the base part 101, of the lens 102; and the antireflection layer 103 may be arranged on the side, away from the lens 102, of the base part 101. Optionally, in some embodiments, the antireflection layer 103 may be arranged wholly on the side, away from the base part 101, of the lens 102; and the antireflection layer 103 may be arranged wholly on the side, away from the lens 102, of the base part 101.

Referring to Fig. 8B, in some embodiments, the antireflection layer 103 may be arranged partially on the side, away from the base part 101, of the lens 102; and the antireflection layer 103 may be arranged partially on the side, away from the lens 102, of the base part 101.

Referring to Fig. 8C, in some embodiments, the antireflection layer 103 may be arranged wholly on the side, away from the base part 101, of the lens 102; and the antireflection layer 103 may be arranged wholly on the side, away from the lens 102, of the base part 101.

Referring to Fig. 8D, in some embodiments, the antireflection layer 103 may be arranged partially on the side, away from the base part 101, of the lens 102; and the antireflection layer 103 may be arranged wholly on the side, away from the lens 102, of the base part 101.

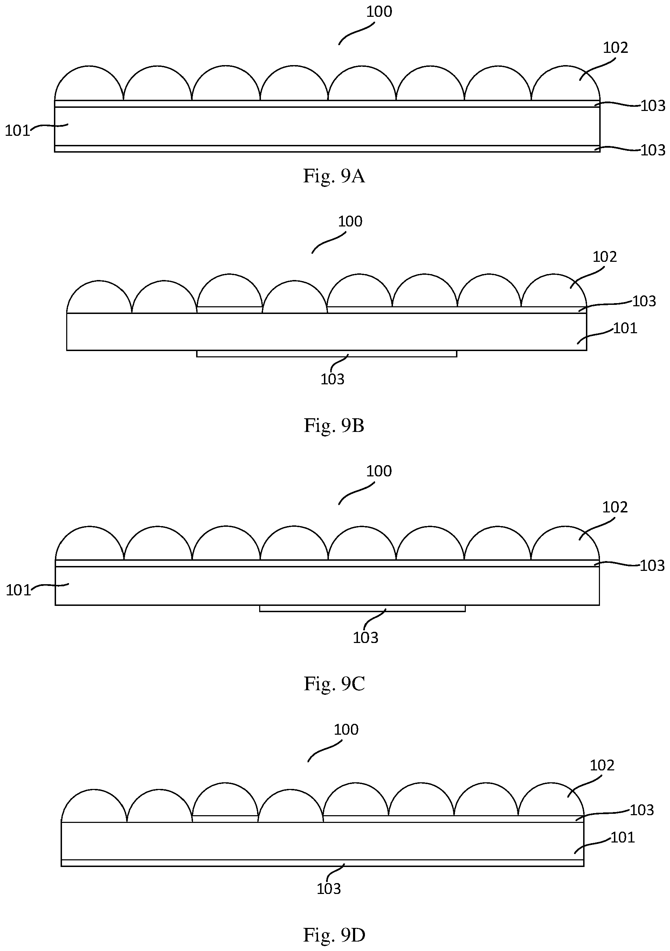

Referring to Fig. 9A, in some embodiments, the antireflection layer 103 may be arranged between the lens 102 and the base part 101; and the antireflection layer 103 may be arranged on the side, away from the lens 102, of the base part 101. Optionally, the antireflection layer 103 may be arranged wholly between the lens 102 and the base part 101; and the antireflection layer 103 may be arranged wholly on the side, away from the lens 102, of the base part 101.

Referring to Fig. 9B, in some embodiments, the antireflection layer 103 may be arranged partially between the lens 102 and the base part 101; and the antireflection layer 103 may be arranged partially on the side, away from the lens 102, of the base part 101.

Referring to Fig. 9C, in some embodiments, the antireflection layer 103 may be arranged wholly between the lens 102 and the base part 101; and the antireflection layer 103 may be arranged partially on the side, away from the lens 102, of the base part 101.

Referring to Fig. 9D, in some embodiments, the antireflection layer 103 may be arranged partially between the lens 102 and the base part 101; and the antireflection layer 103 may be arranged wholly on the side, away from the lens 102, of the base part 101.

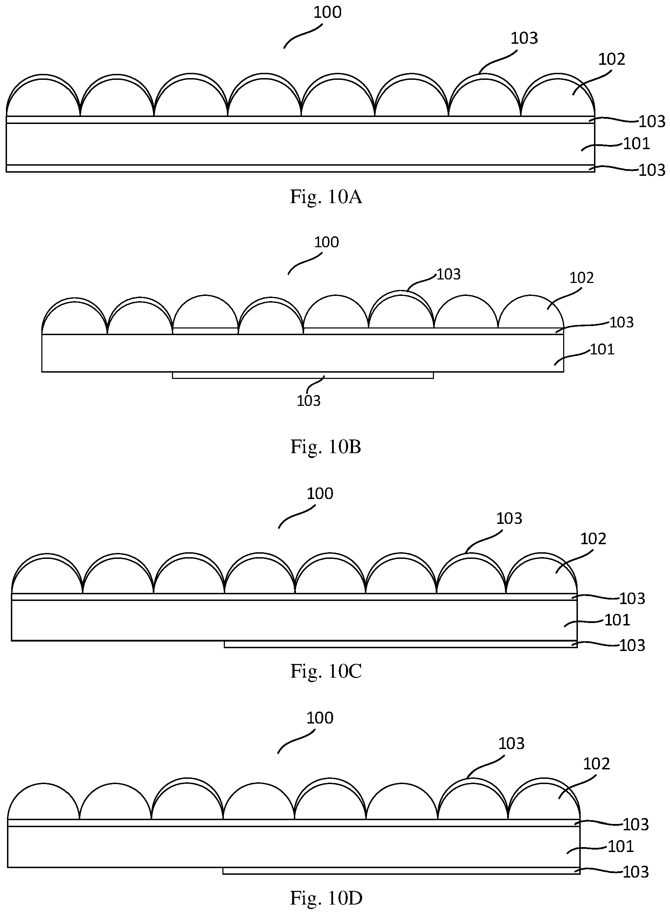

Referring to Figs. 10A-10H, in some embodiments, the antireflection layer 103 may be arranged between the lens 102 and the base part 101; and the antireflection layer 103 may be arranged on the side, away from the base part 101, of the lens 102; and the antireflection layer 103 may be arranged on the side, away from the lens 102, of the base part 101.

Referring to Fig. 10A, the antireflection layer 103 may be arranged wholly between the lens 102 and the base part 101; and the antireflection layer 103 may be arranged wholly on the side, away from the base part 101, of the lens 102; and the antireflection layer 103 may be arranged wholly on the side, away from the lens 102, of the base part 101.

Referring to Fig. 10B, in some embodiments, the antireflection layer 103 may be arranged partially between the lens 102 and the base part 101; and the antireflection layer 103 may be arranged partially on the side, away from the base part 101, of the lens 102; and the antireflection layer 103 may be arranged partially on the side, away from the lens 102, of the base part 101.

Referring to Fig. 10C, in some embodiments, the antireflection layer 103 may be arranged wholly between the lens 102 and the base part 101; and the antireflection layer 103 may be arranged wholly on the side, away from the base part 101, of the lens 102; and the antireflection layer 103 may be arranged partially on the side, away from the lens 102, of the base part 101.

Referring to Fig. 10D, in some embodiments, the antireflection layer 103 may be arranged wholly between the lens 102 and the base part 101; and the antireflection layer 103 may be arranged partially on the side, away from the base part 101, of the lens 102; and the antireflection layer 103 may be arranged partially on the side, away from the lens 102, of the base part 101.

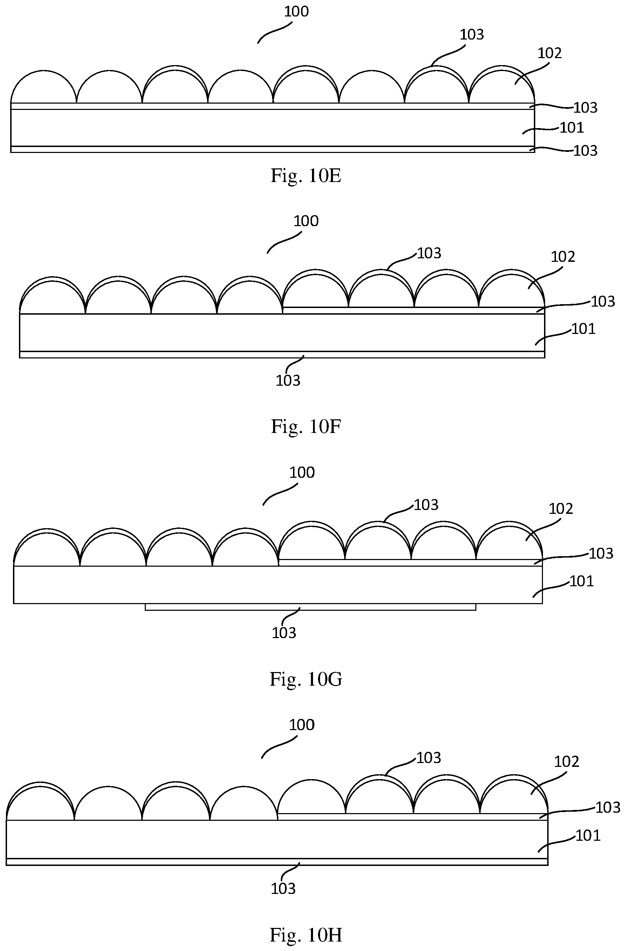

Referring to Fig. 10E, in some embodiments, the antireflection layer 103 may be arranged wholly between the lens 102 and the base part 101; and the antireflection layer 103 may be arranged partially on the side, away from the base part 101, of the lens 102; and the antireflection layer 103 may be arranged wholly on the side, away from the lens 102, of the base part 101.

Referring to Fig. 10F, in some embodiments, the antireflection layer 103 may be arranged partially between the lens 102 and the base part 101; and the antireflection layer 103 may be arranged wholly on the side, away from the base part 101, of the lens 102; and the antireflection layer 103 may be arranged wholly on the side, away from the lens 102, of the base part 101.

Referring to Fig. 10G, in some embodiments, the antireflection layer 103 may be arranged partially between the lens 102 and the base part 101; and the antireflection layer 103 may be arranged wholly on the side, away from the base part 101, of the lens 102; and the antireflection layer 103 may be arranged partially on the side, away from the lens 102, of the base part 101.

Referring to Fig. 10H, in some embodiments, the antireflection layer 103 may be arranged partially between the lens 102 and the base part 101; and the antireflection layer 103 may be arranged partially on the side, away from the base part 101, of the lens 102; and the antireflection layer 103 may be arranged wholly on the side, away from the lens 102, of the base part 101.

In some embodiments, the antireflection layer 103 may comprise an antireflection material.

In some embodiments, the antireflection material may be deposited between the lens 102 and the base part 101, to form the antireflection layer 103.

In some embodiments, the antireflection material may be deposited on the side, away from the base part 101, of the lens 102 to form the antireflection layer 103.

In some embodiments, the antireflection material may be deposited on the side, away from the lens 102, of the base part 101 to form the antireflection layer 103.

In some embodiments, the antireflection material may be deposited by bonding, plating (e.g., evaporation), sputtering, coating, physical vapor deposition (PVD), chemical vapor deposition (CVD) and other processes.

In some embodiments, the lens grating 100 may further comprise a covering layer 104; and the covering layer 104 may have at least one of the following setting modes:
the covering layer 104 may be arranged on the side, away from the lens 102, of the antireflection layer 103, when the antireflection layer 103 is arranged on the side, away from the base part 101, of the lens 102; and
the covering layer 104 may be arranged on a side, away from the base part 101, of the antireflection layer 103, when the antireflection layer 103 is arranged on the side, away from the lens 102, of the base part 101.

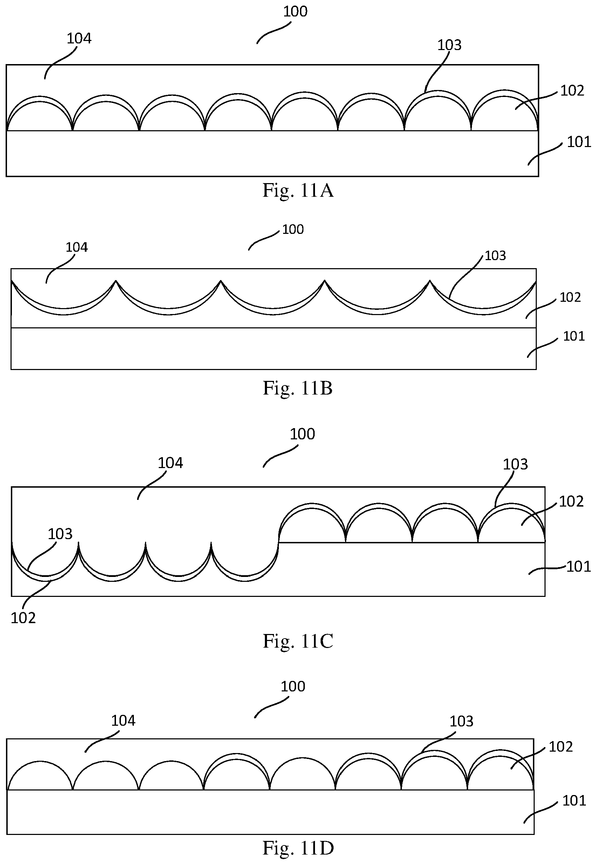

Referring to Figs. 11A-11D, in some embodiments, the covering layer 104 may be arranged on a side, away from the lens 102, of the antireflection layer 103, when the antireflection layer 103 is arranged on a side, away from the base part 101, of the lens 102.

Referring to Figs. 11A-11C, in some embodiments, the covering layer 104 may be arranged on a side, away from the lens 102, of the antireflection layer 103, when the antireflection layer 103 is arranged wholly on a side, away from the base part 101, of the lens 102.

Referring to Fig. 11A, in some embodiments, the lens 102 may comprise convex lenses.

Referring to Fig. 11B, in some embodiments, the lens 102 may comprise concave lenses.

Referring to Fig. 11C, in some embodiments, the lens 102 may comprise a combination of the convex lenses and the concave lenses.

Referring to Fig. 11D, in some embodiments, the covering layer 104 may be arranged on the side, away from the lens 102, of the antireflection layer 103. Optionally, the lens 102 may comprise the convex lenses, when the antireflection layer 103 is arranged partially on the side, away from the base part 101, of the lens 102.

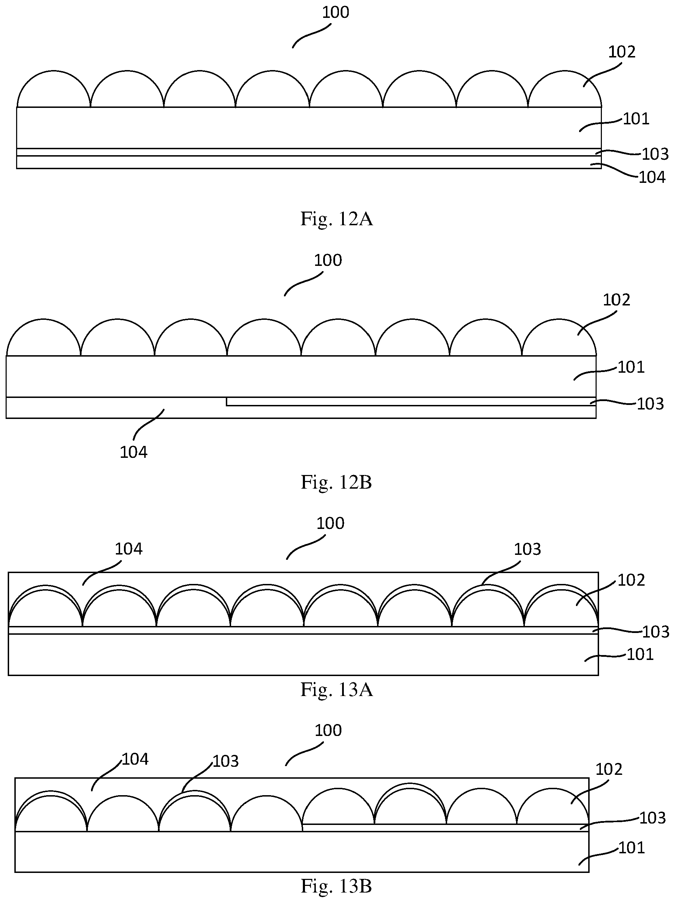

Referring to Fig. 12A, in some embodiments, the covering layer 104 may be arranged on a side, away from the base part 101, of the antireflection layer 103, when the antireflection layer 103 is arranged wholly on a side, away from the lens 102, of the base part 101.

Referring to Fig. 12B, in some embodiments, the covering layer 104 may be arranged on a side, away from the base part 101, of the antireflection layer 103, when the antireflection layer 103 is arranged partially on a side, away from the lens 102, of the base part 101.

Referring to Figs. 13A-13D, in some embodiments, the covering layer 104 is may be arranged on one side, away from the lens 102, of the antireflection layer 103 arranged on the side, away from the lens 102, of the base part 101, when the antireflection layer 103 is arranged between the lens 102 and the base part 101, and the antireflection layer 103 is arranged on the side, away from the base part 101, of the lens 102.

Referring to Fig. 13A, in some embodiments, the covering layer 104 may be arranged on the side, away from the lens 102, of the antireflection layer 103 arranged wholly on the side, away from the base part 101, of the lens 102, when the antireflection layer 103 may be arranged wholly between the lens 102 and the base part 101, and the antireflection layer 103 may be arranged wholly on the side, away from the base part 101, of the lens 102.

Referring to Fig. 13B, in some embodiments, the covering layer 104 may be arranged on a side, away from the lens 102, of the antireflection layer 103 arranged partially on the side, away from the base part 101, of the lens 102, when the antireflection layer 103 may be arranged partially between the lens 102 and the base part 101, and the antireflection layer 103 may be arranged partially on the side, away from the base part 101, of the lens 102.

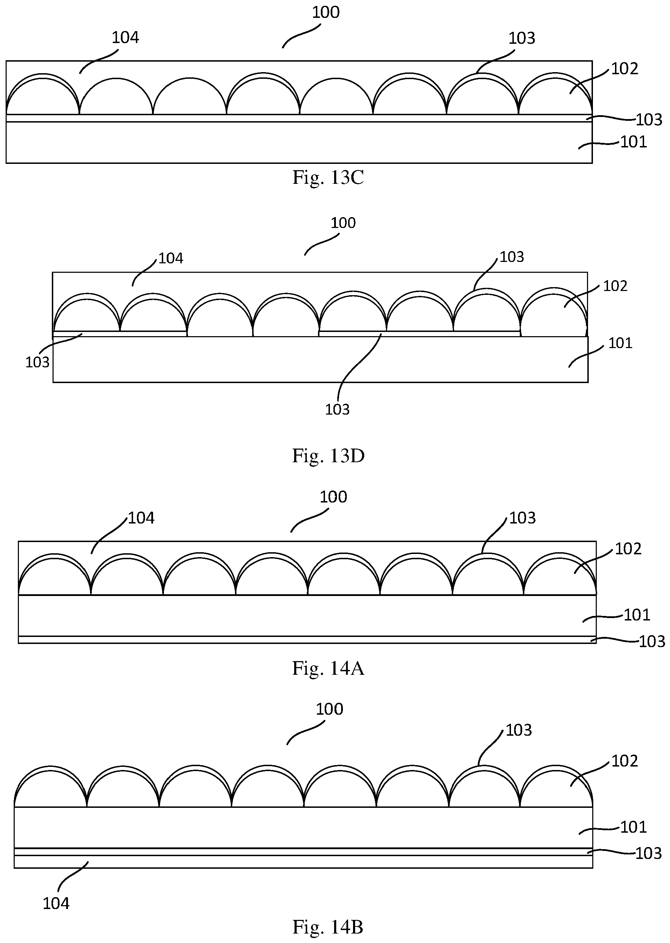

Referring to Fig. 13C, in some embodiments, the covering layer 104 may be arranged on the side, away from the lens 102, of the antireflection layer 103 arranged partially on the side, away from the base part 101, of the lens 102, when the antireflection layer 103 may be arranged wholly between the lens 102 and the base part 101, and the antireflection layer 103 may be arranged partially on the side, away from the base part 101, of the lens 102.

Referring to Fig. 13D, in some embodiments, the covering layer 104 may be arranged on a side, away from the lens 102, of the antireflection layer 103 arranged wholly on the side, away from the base part 101, of the lens 102, when the antireflection layer 103 may be arranged partially between the lens 102 and the base part 101, and the antireflection layer 103 may be arranged wholly on a side, away from the base part 101, of the lens 102.

Referring to Figs. 14A-14C, in some embodiments, the covering layer 104 may have at least one of the following setting modes:
the covering layer 104 may be arranged on the side, away from the lens 102, of the antireflection layer 103, when the antireflection layer 103 is arranged wholly on the side, away from the base part 101, of the lens 102; and
the covering layer 104 may be arranged on the side, away from the base part 101, of the antireflection layer 103, when the antireflection layer 103 is arranged wholly on the side, away from the lens 102, of the base part 101.

Referring to Fig. 14A, in some embodiments, the covering layer 104 may be arranged on the side, away from the lens 102, of the antireflection layer 103 arranged wholly on the side, away from the base part 101, of the lens 102.

Referring to Fig. 14B, in some embodiments, the covering layer 104 may be arranged on a side, away from the base part 101, of the antireflection layer 103 arranged wholly on the side, away from the lens 102, of the base part 101.

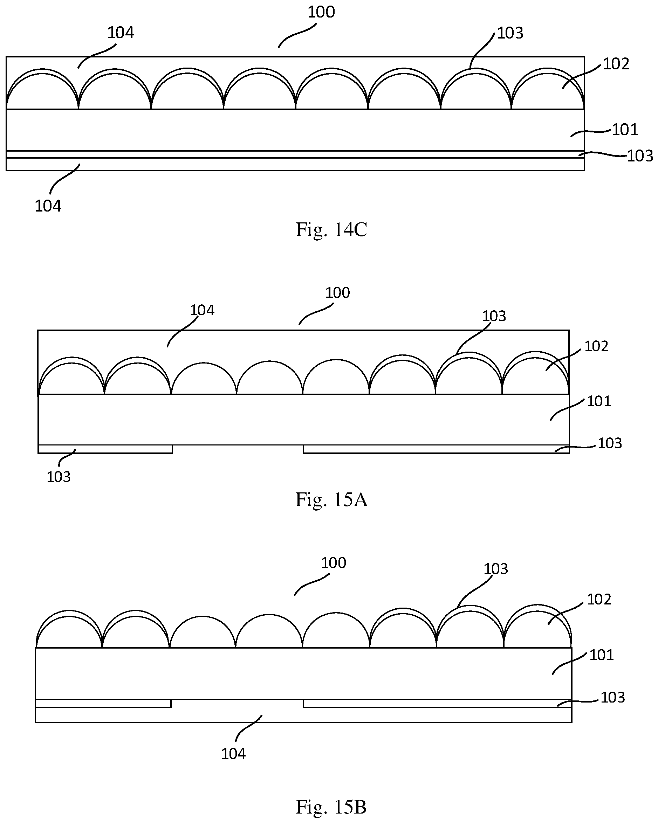

Referring to Fig. 14C, in some embodiments, the covering layer 104 may be arranged on a side, away from the lens 102, of the antireflection layer 103 arranged wholly on a side, away from the base part 101, of the lens 102; and the covering layer 104 may be arranged on a side, away from the base part 101, of the antireflection layer 103 arranged wholly on a side, away from the lens 102, of the base part 101.

Referring to Figs. 15A-15C, in some embodiments, the covering layer 104 may have at least one of the following setting modes:
the covering layer 104 may be arranged on a side, away from the lens 102, of the antireflection layer 103, when the antireflection layer 103 is arranged partially on a side, away from the base part 101, of the lens 102; and
the covering layer 104 may be arranged on a side, away from the base part 101, of the antireflection layer 103, when the antireflection layer 103 is arranged partially on the side, away from the lens 102, of the base part 101.

Referring to Fig. 15A, in some embodiments, the covering layer 104 may be arranged on a side, away from the lens 102, of the antireflection layer 103 arranged partially on a side, away from the base part 101, of the lens 102.

Referring to Fig. 15B, in some embodiments, the covering layer 104 may be arranged on a side, away from the base part 101, of the antireflection layer 103 arranged partially on a side, away from the lens 102, of the base part 101.

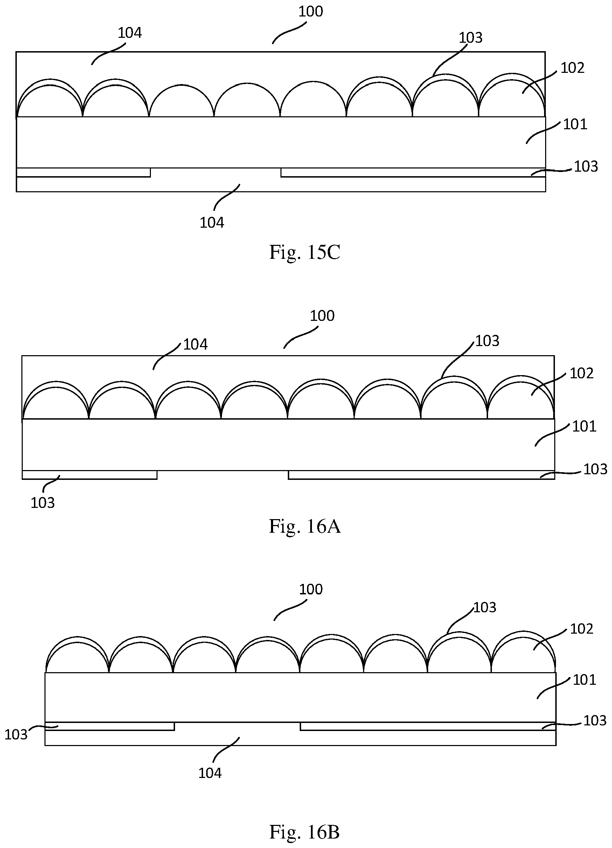

Referring to Fig. 15C, in some embodiments, the covering layer 104 may be arranged on a side, away from the lens 102, of the antireflection layer 103 arranged partially on a side, away from the base part 101, of the lens 102; and the covering layer 104 may be arranged on a side, away from the base part 101, of the antireflection layer 103 arranged partially on a side, away from the lens 102, of the base part 101.

Referring to Figs. 16A-16C, in some embodiments, the covering layer 104 may have at least one of the following setting modes:
the covering layer 104 may be arranged on the side, away from the lens 102, of the antireflection layer 103, when the antireflection layer 103 is arranged wholly on the side, away from the base part 101, of the lens 102; and
the covering layer 104 may be arranged on the side, away from the base part 101, of the antireflection layer 103, when the antireflection layer 103 is arranged partially on the side, away from the lens 102, of the base part 101.

Referring to Fig. 16A, in some embodiments, the covering layer 104 may be arranged on a side, away from the lens 102, of the antireflection layer 103 arranged wholly on a side, away from the base part 101, of the lens 102.

Referring to Fig. 16B, in some embodiments, the covering layer 104 may be arranged on a side, away from the base part 101, of the antireflection layer 103 arranged partially on a side, away from the lens 102, of the base part 101.

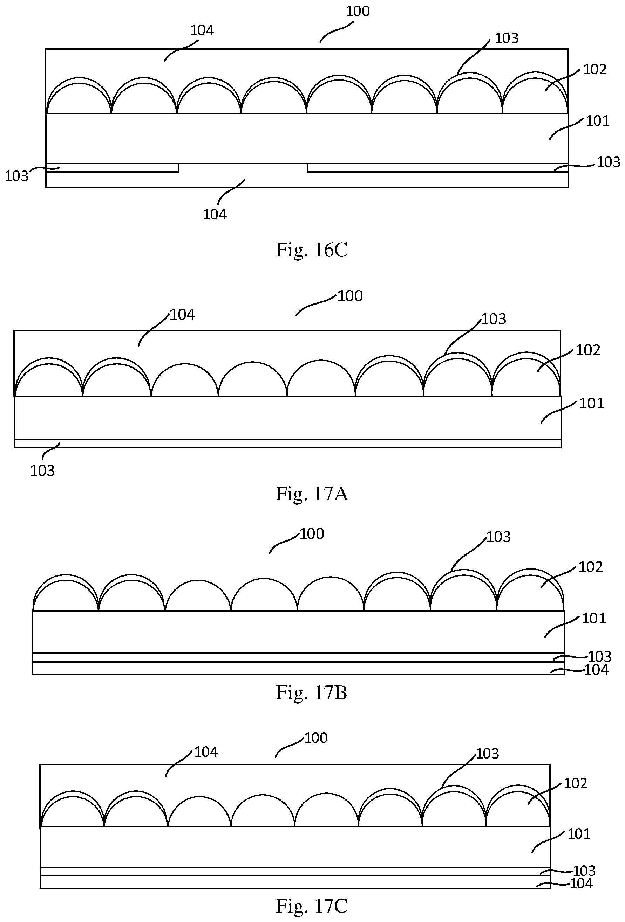

Referring to Fig. 16C, in some embodiments, the covering layer 104 may be arranged on a side, away from the lens 102, of the antireflection layer 103 arranged wholly on a side, away from the base part 101, of the lens 102; and the covering layer 104 may be arranged on a side, away from the base part 101, of the antireflection layer 103 arranged partially on a side, away from the lens 102, of the base part 101.

Referring to Figs. 17A-17C, in some embodiments, the covering layer 104 may have at least one of the following setting modes:
the covering layer 104 may be arranged on a side, away from the lens 102, of the antireflection layer 103, when the antireflection layer 103 is arranged partially on a side, away from the base part 101, of the lens 102; and
the covering layer 104 may be arranged on a side, away from the base part 101, of the antireflection layer 103, when the antireflection layer 103 is arranged wholly on a side, away from the lens 102, of the base part 101.

Referring to Fig. 17A, in some embodiments, the covering layer 104 may be arranged on a side, away from the lens 102, of the antireflection layer 103 arranged partially on a side, away from the base part 101, of the lens 102.

Referring to Fig. 17B, in some embodiments, the covering layer 104 may be arranged on a side, away from the base part 101, of the antireflection layer 103 arranged wholly on a side, away from the lens 102, of the base part 101.

Referring to Fig. 17C, in some embodiments, the covering layer 104 may be arranged on a side, away from the lens 102, of the antireflection layer 103 arranged partially on a side, away from the base part 101, of the lens 102; and the covering layer 104 may be arranged on a side, away from the base part 101, of the antireflection layer 103 arranged wholly on the side, away from the lens 102, of the base part 101.

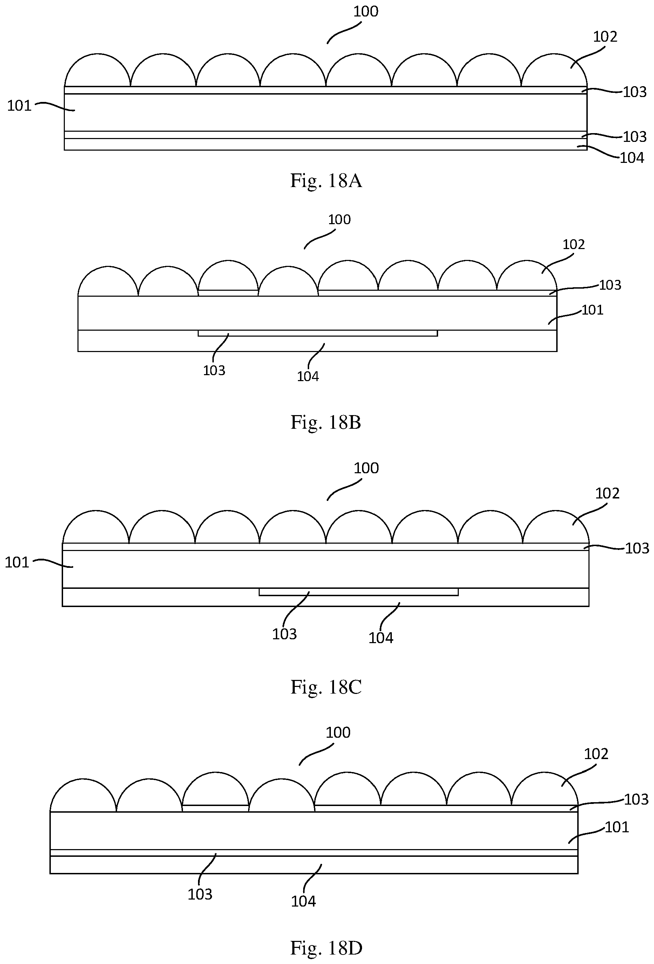

Referring to Fig. 18A, in some embodiments, the covering layer 104 may be arranged on a side, away from the base part 101, of the antireflection layer 103 arranged wholly on a side, away from the lens 102, of the base part 101, when the antireflection layer 103 may be arranged wholly between the lens 102 and the base part 101, and the antireflection layer 103 may be arranged wholly on the side, away from the lens 102, of the base part 101.

Referring to Fig. 18B, in some embodiments, the covering layer 104 may be arranged on a side, away from the base part 101, of the antireflection layer 103 arranged partially on a side, away from the lens 102, of the base part 101, when the antireflection layer 103 may be arranged partially between the lens 102 and the base part 101, and the antireflection layer 103 may be arranged partially on the side, away from the lens 102, of the base part 101.

Referring to Fig. 18C, in some embodiments, the covering layer 104 may be arranged on a side, away from the base part 101, of the antireflection layer 103 arranged partially on the side, away from the lens 102, of the base part 101, when the antireflection layer 103 may be arranged wholly between the lens 102 and the base part 101, and the antireflection layer 103 may be arranged partially on a side, away from the lens 102, of the base part 101.

Referring to Fig. 18D, in some embodiments, the covering layer 104 may be arranged on a side, away from the base part 101, of the antireflection layer 103 arranged wholly on a side, away from the lens 102, of the base part 101, when the antireflection layer 103 may be arranged partially between the lens 102 and the base part 101, and the antireflection layer 103 may be arranged wholly on a side, away from the lens 102, of the base part 101.

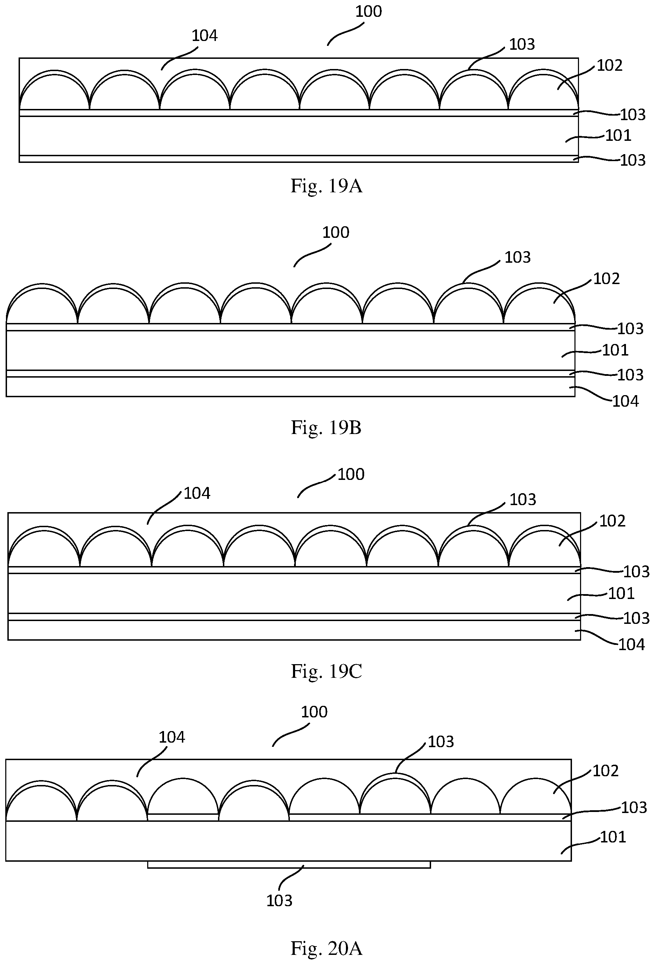

Referring to Figs. 19A-26C, in some embodiments, the antireflection layer 103 may be arranged between the lens 102 and the base part 101; and the antireflection layer 103 may be arranged on a side, away from the base part 101, of the lens 102; and when the antireflection layer may be arranged on the side, away from the lens 102, of the base part 101, the covering layer 104 may have at least one of the following setting modes:
the covering layer 104 may be arranged on a side, away from the lens 102, of the antireflection layer 103, when the antireflection layer 103 is arranged on a side, away from the base part 101, of the lens 102; and
the covering layer 104 may be arranged on a side, away from the base part 101, of the antireflection layer 103, when the antireflection layer 103 is arranged on a side, away from the lens 102, of the base part 101.

Referring to Fig. 19A, in some embodiments, the covering layer 104 may be arranged on a side, away from the lens 102, of the antireflection layer 103 arranged wholly on a side, away from the base part 101, of the lens 102, when the antireflection layer 103 may be arranged wholly between the lens 102 and the base part 101, the antireflection layer 103 may be arranged wholly on a side, away from the base part 101, of the lens 102, and the antireflection layer 103 may be arranged wholly on a side, away from the lens 102, of the base part 101.

Referring to Fig. 19B, in some embodiments, the covering layer 104 may be arranged on a side, away from the base part 101, of the antireflection layer 103 arranged wholly on a side, away from the lens 102, of the base part 101.

Referring to Fig. 19C, in some embodiments, the covering layer 104 may be arranged on a side, away from the lens 102, of the antireflection layer 103 arranged wholly on a side, away from the base part 101, of the lens 102; and the covering layer 104 may be arranged on a side, away from the base part 101, of the antireflection layer 103 arranged wholly on a side, away from the lens 102, of the base part 101.

Referring to Fig. 20A, in some embodiments, the covering layer 104 may be arranged on the side, away from the lens 102, of the antireflection layer 103 arranged partially on the side, away from the base part 101, of the lens 102, when the antireflection layer 103 may be arranged partially between the lens 102 and the base part 101, the antireflection layer 103 may be arranged partially on the side, away from the base part 101, of the lens 102, and the antireflection layer 103 may be arranged partially on the side, away from the lens 102, of the base part 101.

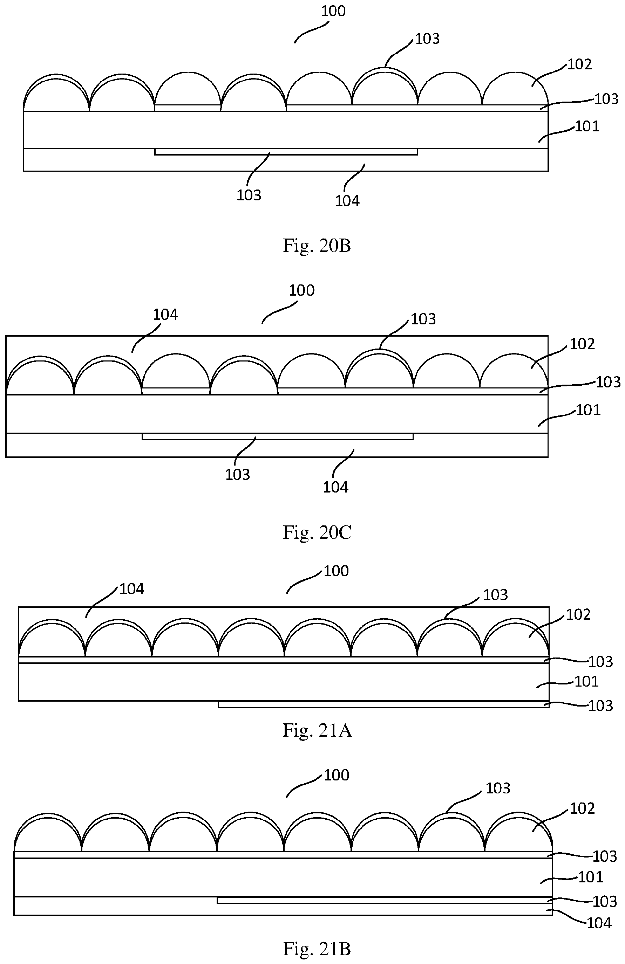

Referring to Fig. 20B, in some embodiments, the covering layer 104 may be arranged on the side, away from the base part 101, of the antireflection layer 103 arranged partially on the side, away from the lens 102, of the base part 101.

Referring to Fig. 20C, in some embodiments, the covering layer 104 may be arranged on the side, away from the lens 102, of the antireflection layer 103 arranged partially on the side, away from the base part 101, of the lens 102; and the covering layer 104 may be arranged on the side, away from the base part 101, of the antireflection layer 103 arranged partially on the side, away from the lens 102, of the base part 101.

Referring to Fig. 21A, in some embodiments, the covering layer 104 may be arranged on the side, away from the lens 102, of the antireflection layer 103 arranged wholly on the side, away from the base part 101, of the lens 102, when the antireflection layer 103 may be arranged wholly between the lens 102 and the base part 101, the antireflection layer 103 may be arranged wholly on the side, away from the base part 101, of the lens 102, and the antireflection layer 103 may be arranged partially on the side, away from the lens 102, of the base part 101.

Referring to Fig. 21B, in some embodiments, the covering layer 104 may be arranged on the side, away from the base part 101, of the antireflection layer 103 arranged partially on the side, away from the lens 102, of the base part 101.

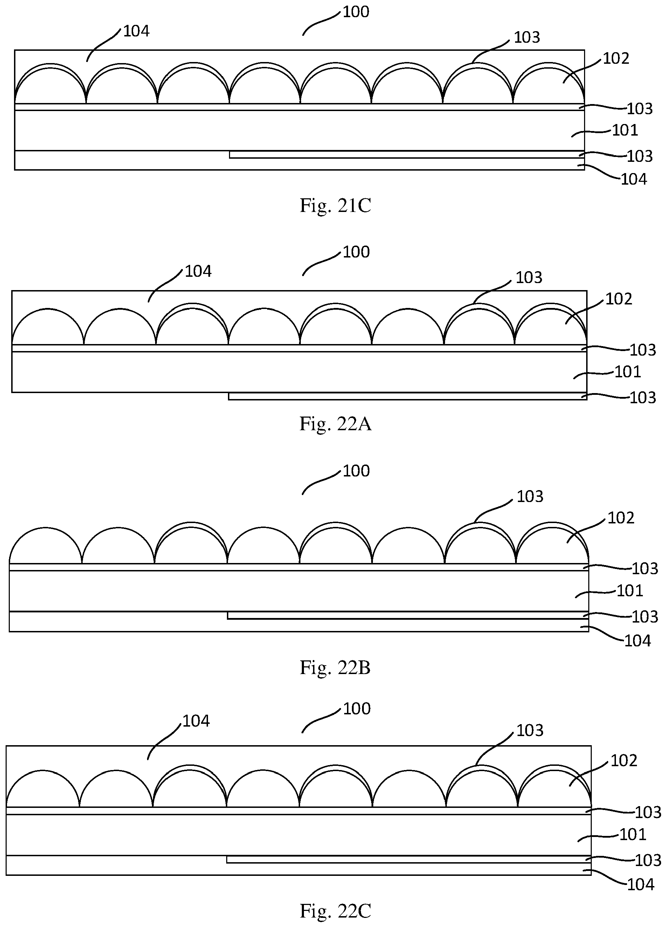

Referring to Fig. 21C, in some embodiments, the covering layer 104 may be arranged on the side, away from the lens 102, of the antireflection layer 103 arranged wholly on the side, away from the base part 101, of the lens 102; and the covering layer 104 may be arranged on the side, away from the base part 101, of the antireflection layer 103 arranged partially on the side, away from the lens 102, of the base part 101.

Referring to Fig. 22A, in some embodiments, the covering layer 104 may be arranged on the side, away from the lens 102, of the antireflection layer 103 arranged partially on the side, away from the base part 101, of the lens 102, when the antireflection layer 103 may be arranged wholly between the lens 102 and the base part 101, the antireflection layer 103 may be arranged partially on the side, away from the base part 101, of the lens 102, and the antireflection layer 103 may be arranged partially on the side, away from the lens 102, of the base part 101.

Referring to Fig. 22B, in some embodiments, the covering layer 104 may be arranged on the side, away from the base part 101, of the antireflection layer 103 arranged partially on the side, away from the lens 102, of the base part 101.

Referring to Fig. 22C, in some embodiments, the covering layer 104 may be arranged on the side, away from the lens 102, of the antireflection layer 103 arranged partially on the side, away from the base part 101, of the lens 102; and the covering layer 104 may be arranged on the side, away from the base part 101, of the antireflection layer 103 arranged partially on the side, away from the lens 102, of the base part 101.

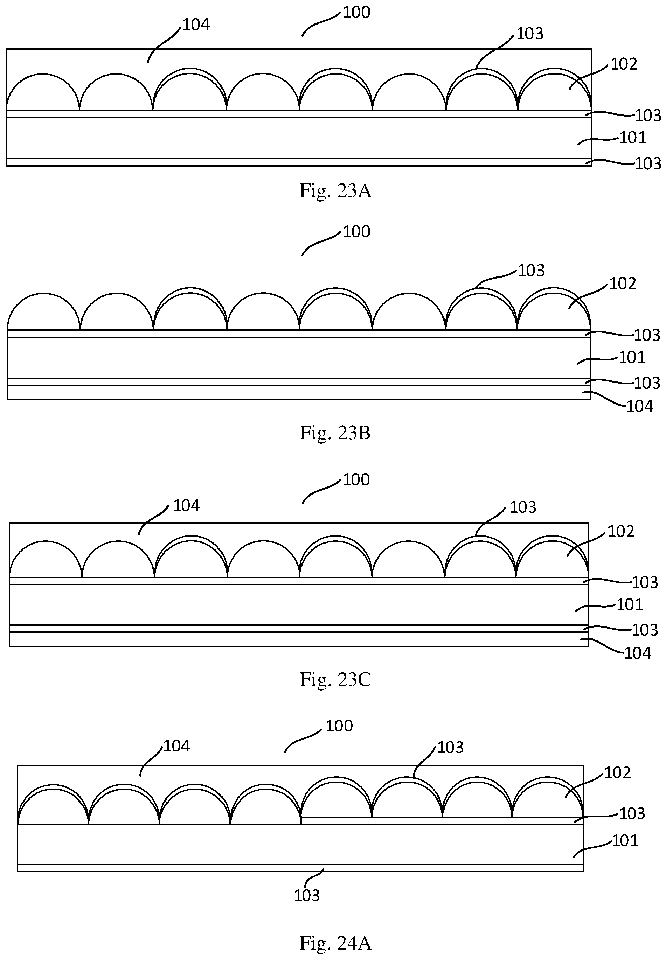

Referring to Fig. 23A, in some embodiments, the covering layer 104 may be arranged on the side, away from the lens 102, of the antireflection layer 103 arranged partially on the side, away from the base part 101, of the lens 102, when the antireflection layer 103 may be arranged wholly between the lens 102 and the base part 101, the antireflection layer 103 may be arranged partially on the side, away from the base part 101, of the lens 102, and the antireflection layer 103 may be arranged wholly on the side, away from the lens 102, of the base part 101.

Referring to Fig. 23B, in some embodiments, the covering layer 104 may be arranged on the side, away from the base part 101, of the antireflection layer 103 arranged wholly on the side, away from the lens 102, of the base part 101.

Referring to Fig. 23C, in some embodiments, the covering layer 104 may be arranged on the side, away from the lens 102, of the antireflection layer 103 arranged partially on the side, away from the base part 101, of the lens 102; and the covering layer 104 may be arranged on the side, away from the base part 101, of the antireflection layer 103 arranged wholly on the side, away from the lens 102, of the base part 101.

Referring to Fig. 24A, in some embodiments, the covering layer 104 may be arranged on the side, away from the lens 102, of the antireflection layer 103 arranged wholly on the side, away from the base part 101, of the lens 102, when the antireflection layer 103 may be arranged partially between the lens 102 and the base part 101, the antireflection layer 103 may be arranged wholly on the side, away from the base part 101, of the lens 102, and the antireflection layer 103 may be arranged wholly on the side, away from the lens 102, of the base part 101.

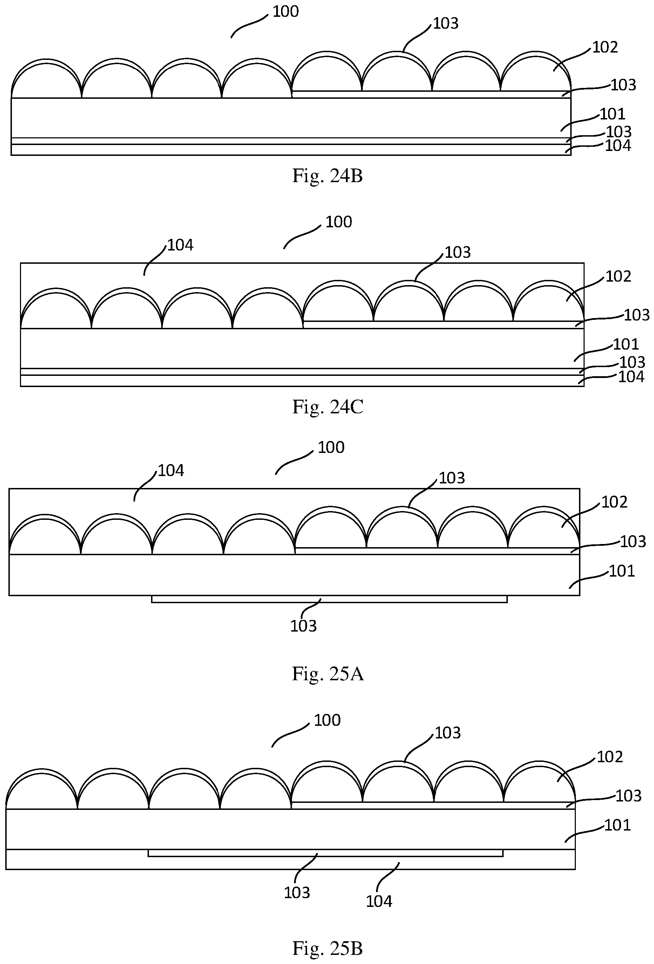

Referring to Fig. 24B, in some embodiments, the covering layer 104 may be arranged on the side, away from the base part 101, of the antireflection layer 103 arranged wholly on the side, away from the lens 102, of the base part 101.

Referring to Fig. 24C, in some embodiments, the covering layer 104 may be arranged on the side, away from the lens 102, of the antireflection layer 103 arranged wholly on the side, away from the base part 101, of the lens 102; and the covering layer 104 may be arranged on the side, away from the base part 101, of the antireflection layer 103 arranged wholly on the side, away from the lens 102, of the base part 101.

Referring to Fig. 25A, in some embodiments, the covering layer 104 may be arranged on the side, away from the lens 102, of the antireflection layer 103 arranged wholly on the side, away from the base part 101, of the lens 102, when the antireflection layer 103 may be arranged partially between the lens 102 and the base part 101, the antireflection layer 103 may be arranged wholly on the side, away from the base part 101, of the lens 102, and the antireflection layer 103 may be arranged partially on the side, away from the lens 102, of the base part 101.

Referring to Fig. 25B, in some embodiments, the covering layer 104 may be arranged on the side, away from the base part 101, of the antireflection layer 103 arranged partially on the side, away from the lens 102, of the base part 101.

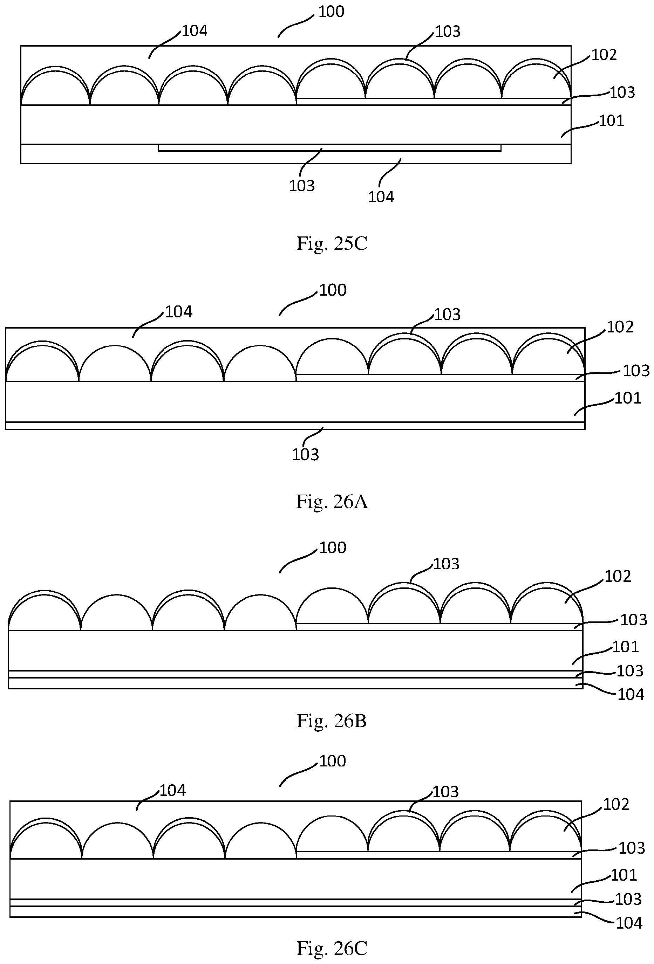

Referring to Fig. 25C, in some embodiments, the covering layer 104 may be arranged on the side, away from the lens 102, of the antireflection layer 103 arranged wholly on the side, away from the base part 101, of the lens 102; and the covering layer 104 may be arranged on the side, away from the base part 101, of the antireflection layer 103 arranged partially on the side, away from the lens 102, of the base part 101.

Referring to Fig. 26A, in some embodiments, the covering layer 104 may be arranged on the side, away from the lens 102, of the antireflection layer 103 arranged wholly on the side, away from the base part 101, of the lens 102, when the antireflection layer 103 may be arranged partially between the lens 102 and the base part 101, the antireflection layer 103 may be arranged wholly on the side, away from the base part 101, of the lens 102, and the antireflection layer 103 may be arranged partially on the side, away from the lens 102, of the base part 101.

Referring to Fig. 26B, in some embodiments, the covering layer 104 may be arranged on the side, away from the base part 101, of the antireflection layer 103 arranged wholly on the side, away from the lens 102, of the base part 101.

Referring to Fig. 26C, in some embodiments, the covering layer 104 may be arranged on the side, away from the lens 102, of the antireflection layer 103 arranged partially on the side, away from the base part 101, of the lens 102; and the covering layer 104 may be arranged on the side, away from the base part 101, of the antireflection layer 103 arranged wholly on the side, away from the lens 102, of the base part 101.

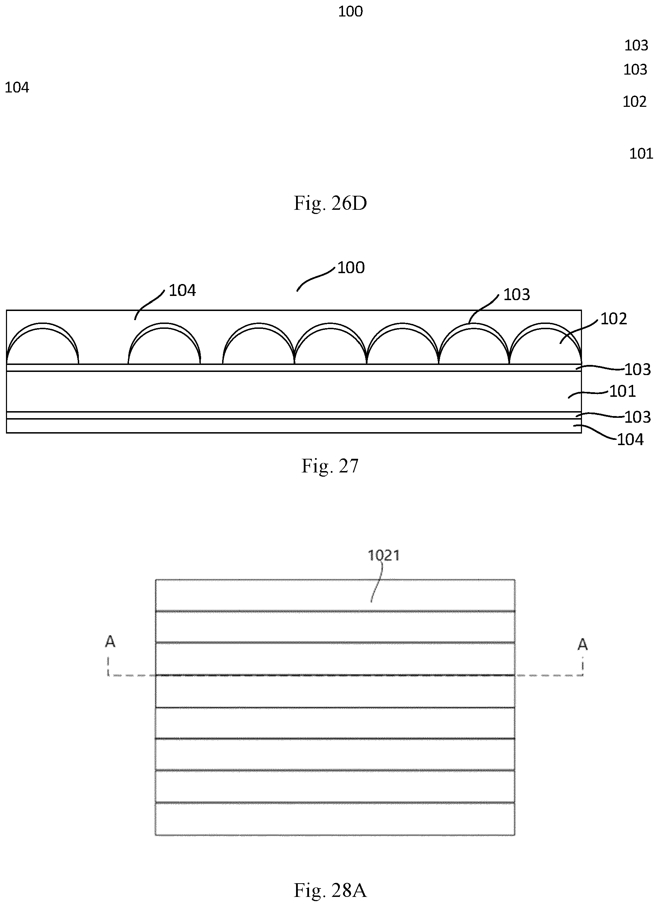

Referring to Fig. 26D, the antireflection layer 103 may be arranged on a surface of the covering layer 104.

Fig. 26D is only an illustrative example, wherein the mode of arranging the antireflection layer 103 on the surface of the covering layer 104 may also be applied to the aforementioned related descriptions, for example, may be applied to Figs. 11A- 26C.

In some embodiments, refractive indexes of the lens 102 and the covering layer 104 may be different. Optionally, the lens 102 may be made of a material with a first refractive index; and the covering layer 104 may be made of a material with a second refractive index. Optionally, the material with the second refractive index may be coated on the side, away from the lens 102, of the antireflection layer 103 to form the covering layer 104; and the material with the second refractive index may be coated on the side, away from the base part 101, of the antireflection layer 103 to form the covering layer 104.

In some embodiments, refractive indexes of at least two of the following antireflection layers 103 may be different:
a refractive index of the antireflection layer 103 arranged between the lens 102 and the base part 101;
a refractive index of the antireflection layer 103 arranged on the side, away from the base part 101, of the lens 102;
a refractive index of the antireflection layer 103 arranged on the side, away from the lens 102, of the base part 101; and
a refractive index of the antireflection layer 103 arranged on the surface of the covering layer 104.

Referring to Figs. 1-27, in some embodiments, part or all of the adjacent lenses 102 may be gapless or gapped.

Referring to Figs. 1-26D, in some embodiments, all the adjacent lenses 102 may be gapless.

Referring to Fig. 27, in some embodiments, part of the adjacent lenses 102 may be gapless or gapped.

In some embodiments, the lens 102 may comprise at least one of lenticular lenses 1021 and spherical lenses 1022. Optionally, the lenticular lenses 1021 may comprise at least one of lenticular concave lenses, lenticular convex lenses, and a combination of the lenticular convex lenses and the lenticular concave lenses. Optionally, the spherical lens 1022 may comprise at least one of spherical concave lenses, spherical convex lenses, a combination of the spherical concave lenses and the spherical convex lenses. Optionally, the lens 102 may comprise at least one of a combination of the lenticular convex lenses and the spherical convex lenses, a combination of the lenticular convex lenses and the spherical concave lenses, a combination of the lenticular concave lenses and the spherical concave lenses, and a combination of the lenticular concave lenses and the spherical convex lenses.

In some embodiments, no matter whether the lens 102 comprises the lenticular lenses 1021 or the spherical lenses 1022 or has other shapes, at least one curve of a surface of the lens 102 macroscopically may be of a circular or noncircular shape, such as oval, hyperbolic, parabolic and other shapes. Optionally, at least one curve of the surface of the lens 102 microscopically may be of a noncircular shape, such as polygonal and other noncircular shapes. Optionally, the shape of the lens 102 may be determined according to actual conditions such as process requirements, for example, the shape of the surface of the lens 102.

In some embodiments, lenses 102 may be arranged in array.

In some embodiments, the lenses 102 may comprise lenticular lenses 1021. Optionally, part or all of the lenticular lenses 1021 may be arranged on the base part 101 in parallel.

Referring to Fig. 28A, in some embodiments, all the lenticular lenses 1021 may be arranged in parallel.

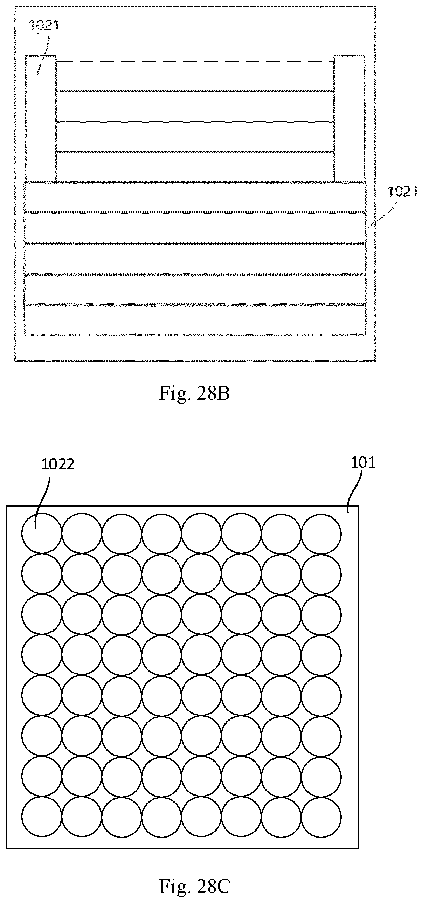

Referring to Fig. 28B, in some embodiments, part of the lenticular lenses 1021 may be arranged on the base part 101 in parallel. Optionally, part of the lenticular lenses 1021 may be arranged according to a preset direction; the preset direction may comprise a direction forming a preset angle with the arrangement direction of the lenticular lenses 1021 arranged in parallel; and the setting of the preset angle may be considered according to actual conditions such as process requirements.

In some embodiments, a plurality of lenses 102 may comprise spherical lenses 1022. Optionally, part or all of the spherical lenses 1022 may be arranged on the base part 101 in array.

Referring to Fig. 28C, in some embodiments, all the spherical lenses 1022 may be arranged on the base part 101 in array.

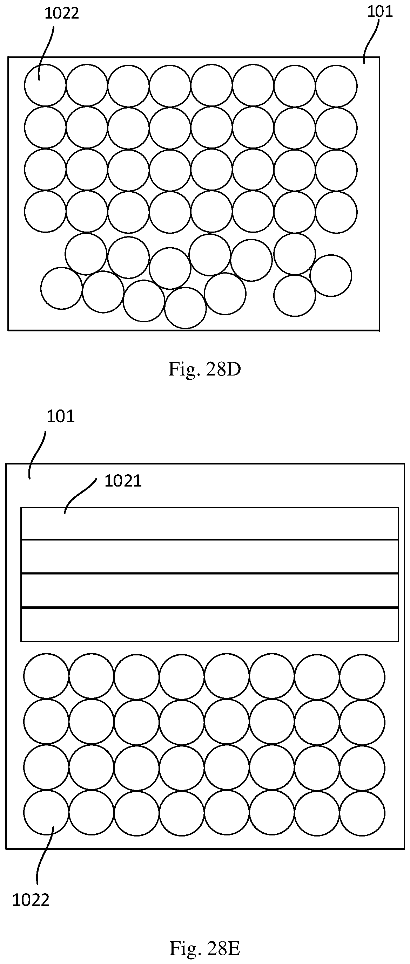

Referring to Fig. 28D, in some embodiments, part of the spherical lenses 1022 may be arranged on the base part 101 in array. The number of spherical lenses 1022 and spatial arrangement on the base part 101 may be determined according to actual conditions such as process requirements.

Referring to Fig. 28E, in some embodiments, the plurality of lenses 102 may comprise lenticular lenses 1021 and spherical lenses 1022, all the lenticular lenses 1021 may be arranged on the base part 101 in parallel, and all the spherical lenses 1022 may be arranged on the base part 101 in array. Optionally, all the lenticular lenses 1021 may be arranged on the base part 101 in parallel, and part of the spherical lenses 1022 may be arranged on the base part 101 in array. Optionally, part of the lenticular lenses 1021 may be arranged on the base part 101 in parallel, and all the spherical lenses 1022 may be arranged on the base part 101 in array. Optionally, part of the lenticular lenses 1021 may be arranged on the base part 101 in parallel, and part of the spherical lenses 1022 may be arranged on the base part 101 in array. The number of the lenticular lenses 1021 and the spherical lenses 1022 and spatial arrangement on the base part 101 may be determined according to actual conditions such as process requirements.

In some embodiments, the lens 102 and the base part 101 may be integrally formed, or the lens 102 and the base part 101 may be arranged independently to each other.

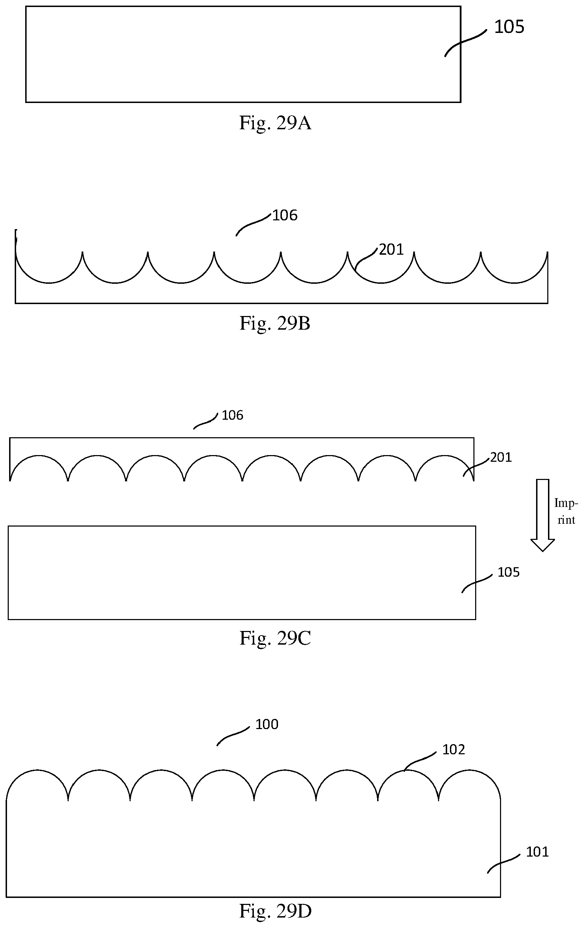

Referring to Fig. 29A, in some embodiments, a filling material 105 for manufacturing the lens 102 and the base part 101 is provided. Optionally, the lens 101 and the base part 101 may be made of the same filling material 105; and the filling material 105 may be a lens material.

Referring to Fig. 29B, in some embodiments, an imprint template 106 having a lens 201 with a preset shape corresponding to the lens 102 may be manufactured. Optionally, the preset shape of the lens 201 on the imprint template 106 may be a shape of a concave lens, corresponding to a shape of a convex lens to be manufactured.

Referring to Fig. 29C, in some embodiments, the filling material 105 may be imprinted and cured with the imprint template 106.

Referring to Fig. 29D, in some embodiments, the imprint template 106 may be separated, so that the lens 102 and the base part 101 are integrally formed.

In some embodiments, the lens 102 and the base part 101 may be arranged independently to each other. Optionally, the base part 101 is manufactured; the lens 102 is manufactured; and the lens 102 and the base part 101 can be bonded by a medium. Optionally, the medium may comprise an adhesive. Optionally, the adhesive may comprise at least one of optical cleaning adhesive and optical clear adhesive.

In some embodiments, the base part 101 may be manufactured first; and the lens 102 is formed on one side of the base part 101.

In some embodiments, the lens 102 may be manufactured by a nano-imprint lithography: coating the base part 101 with a material used for manufacturing the lens 102, and forming the lens 102 in a nano-imprinting mode.

In some embodiments, the lens 102 may also be manufactured by a hot-melt method: laying a material used for manufacturing the lens 102 on the base part 101, photoetching the material used for manufacturing the lens 102, heating a remaining part after photoetching, forming the shape of the lens 102 under the action of surface tension, and cooling to form the lens 102.

In some embodiments, the lens 102 may also be manufactured by an etching method: laying a material layer used for manufacturing the lens 102 on the base part 101, depositing photoresist on the material layer used for manufacturing the lens 102, photoetching to form the shape of the lens 102, etching the material layer of the lens 102 with the photoresist as a mask to form the lens 102, and then removing the remaining photoresist.

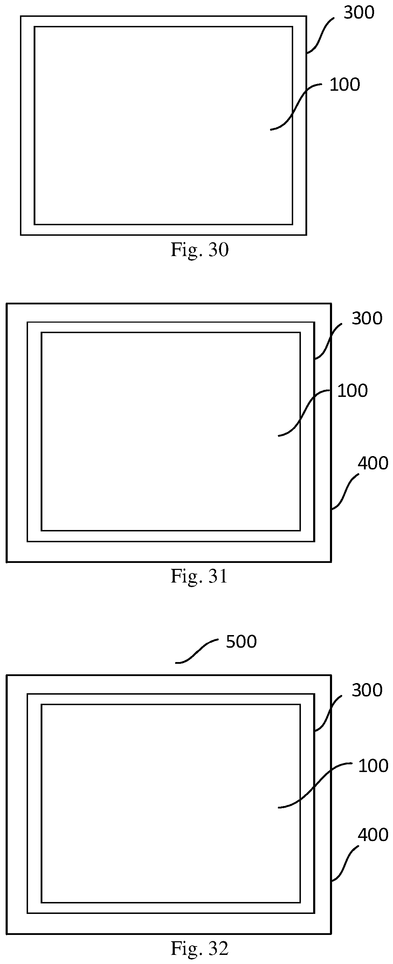

Referring to Fig. 30, embodiments of the present disclosure further provide a display module 300, comprising the above lens grating 100.

Referring to Fig. 31, embodiments of the present disclosure further provide a display screen 400, comprising the above display module 300.

Referring to Fig. 32, embodiments of the present disclosure further provide a display 500, comprising the above display screen 400.

In some embodiments, the display 500 may further comprise other components for supporting normal operation of the display 500, such as at least one of a communication interface, a framework, a control circuit and the like.

Light emitted by the subpixels reaches the lens through a base layer, and then exits through a lens interface; and the setting of the antireflection layer can effectively reduce stray light caused by reflection of the lens interface, thereby improving quality of 3D images.

The above description and drawings sufficiently illustrate the embodiments of the present disclosure to enable those skilled in the art to practice them. Other embodiments may comprise structural, logical, electrical, process, and other changes. The embodiments represent only possible changes. Unless expressly required, individual components and functions are optional and the order of operations may be changed. Parts and features of some embodiments may be included in or substituted for parts and features of other embodiments. The scope of the disclosed embodiments includes the full scope of the claims, and all available equivalents of the claims. When used in the present application, although the terms of "first", "second", etc. may be possibly used in the present application to describe various elements, these elements should not be limited by these terms. These terms are only used to distinguish one element from another. For example, without changing the meaning of the description, a first element may be called as a second element, and similarly, the second element may be called as the first element, as long as all of "the first elements" that appear are consistently renamed and all of "the second elements" that appear are consistently renamed. The first element and the second element are both elements, but may not be the same element. Moreover, the terms used in the present application are used to describe the embodiments only and not to limit the claims. As used in the illustration of the embodiments and the claims, unless clearly indicated in the context, the singular forms "a", "an" and "the" are also intended to include the plural forms. Similarly, the term "and/or" as used in the present application is meant to include any and all possible combinations of one or more of the associated listings. In addition, when used in the present application, the term "comprise" and its variations "comprises" and/or "comprising", etc., refer to the presence of stated features, integers, steps, operations, elements, and/or components, but does not preclude the presence or addition of one or more other features, integers, steps, operations, elements, components and/or groupings of these. Without further limitations, an element limited by the phrase "comprises a..." does not preclude the presence of additional identical elements in the process, method or device that includes the element. Herein, the difference of each embodiment from each other may be the focus of explanation. The same and similar parts among all of the embodiments may be referred to each other. For the method and product disclosed by the embodiments, if the method and product correspond to a method part disclosed by the embodiments, the description of the method part can be referred to for the related part.

Those skilled in the art may recognize that the units and algorithm steps of each example described in conjunction with the embodiments disclosed herein can be implemented in electronic hardware, or a combination of computer software and electronic hardware. Whether these functions are performed in hardware or software may depend on the specific application and design constraints of the technical solution. Those skilled in the art may use different methods for implementing the described functions for each particular application, but such implementations should not be considered beyond the scope of the embodiments of the present disclosure. Those skilled in the art may clearly understand that, for the convenience and brevity of description, the corresponding processes in the above method embodiments may be referred to for the working processes of the above systems, devices and units, which will not be repeated here.

In the embodiments disclosed herein, the disclosed method and product (including, but not limited to the apparatus and the device) may be realized in other ways. For example, the device embodiments described above are merely schematic. For example, the division of the units may be only a logical functional division, and may be an additional division manner in actual realization. For example, multiple units or components may be combined or integrated into another system, or some features may be ignored or not executed. In addition, the displayed or discussed mutual coupling or direct coupling or communication connection may be indirect coupling or communication connection through some interfaces, devices or units, and may be electrical, mechanical or other forms. The units described as separate components may or may not be physically separated, and the components shown as the units may or may not be physical units, that is, may be located in one place, or may be distributed on multiple network units. The present embodiments may be implemented by selecting some or all of the units according to actual needs. In addition, each functional unit in the embodiments of the present disclosure may be integrated into one processing unit, or each unit may exist physically alone, or two or more units may be integrated into one unit.

In the accompanying drawings, width, length, thickness and the like of structures such as elements or layers may be exaggerated for clarity and description. When a structure such as an element or layer is referred to as being "arranged" (or "mounted", "laid", "attached", "coated" and the like) "above" or "on" another element or layer, the structure such as the element or layer may be directly "arranged" "above" or "on" another element or layer, or a structure such as an intermediate element or layer exists between the element or layer and the another element or layer and even is partially embedded in the another element or layer.

## Claims

1. A lens grating, comprising a base part, and a lens arranged on one side of the base part, wherein an antireflection layer is arranged on one side of the lens or the base part.

2. The lens grating according to claim 1, wherein the antireflection layer has at least one of following setting modes:
an antireflection layer is arranged between the lens and the base part;
an antireflection layer is arranged on one side, away from the base part, of the lens;
an antireflection layer is arranged on one side, away from the lens, of the base part.

3. The lens grating according to claim 2, wherein the antireflection layer has at least one of following setting modes:
an antireflection layer is arranged partially or wholly between the lens and the base part;
an antireflection layer is arranged partially or wholly on a side, away from the base part, of the lens;
an antireflection layer is arranged partially or wholly on a side, away from the lens, of the base part.

4. The lens grating according to claim 2, further comprising a covering layer, wherein the covering layer has at least one of following setting modes:
a covering layer is arranged on a side, away from the lens, of the antireflection layer, when an antireflection layer is arranged on a side, away from the base part, of the lens;
a covering layer is arranged on a side, away from the base part, of the antireflection layer, when an antireflection layer is arranged on a side, away from the lens, of the base part.

5. The lens grating according to claim 4, wherein an antireflection layer is arranged on a surface of the covering layer.

6. The lens grating according to claim 5, wherein refractive indexes of the lens and the covering layer are different.

7. The lens grating according to claim 5, wherein refractive indexes of at least two of following antireflection layers are different:
a refractive index of an antireflection layer arranged between the lens and the base part;
a refractive index of an antireflection layer arranged on a side, away from the base part, of the lens;
a refractive index of an antireflection layer arranged on a side, away from the lens, of the base part;
a refractive index of an antireflection layer arranged on a surface of the cover layer.

8. The lens grating according to claim 1, wherein the lens comprises at least one of concave lenses and convex lenses.

9. The lens grating according to claim 1, wherein the lens comprises at least one of lenticular lenses and spherical lenses.

10. The lens grating according to claim 9, wherein the lenses are arranged in array.

11. The lens grating according to claim 10, wherein the lenses comprise lenticular lenses; and part or all of the lenticular lenses are arranged in parallel.

12. The lens grating according to claim 10, wherein the lenses comprise spherical lenses; and part or all of the spherical lenses are arranged in array.

13. The lens grating according to any one of claims 1-12, wherein
the lens and the base part are integrally formed, or
the lens and the base part are arranged independently to each other.

14. A display module, comprising the lens grating of any one of claims 1-13.

15. A display screen, comprising the display module of claim 14.

16. A display, comprising the display screen of claim 15.
